# EUROPEAN PATENT SPECIFICATION

(11) **EP 4 349 755 B1**
(45) Date of publication and mention of the grant of the patent: **10.09.2025**
(21) Application number: 22810700.9
(22) Date of filing: 17.05.2022
(51) Int. Cl.: B65H 75/38, B65H 75/44, E02B 15/08

(54) **SUPPORT DEVICE FOR A REEL**
TRÄGERVORRICHTUNG FÜR EINE HASPEL
MATÉRIEL DE SUPPORT POUR TAMBOUR

(30) Priority: 27.05.2021 ES 202131084 U
(43) Date of publication of application: 10.04.2024
(73) Proprietor: Markleen Management, S.L., 50840 San Mateo de Gállego (Zaragoza) (ES)
(72) Inventor: ØYE, Peter, 50840 San Mateo de Gállego (Zaragoza) (ES); IRANZO MATA, Emilio, 50840 San Mateo de Gállego (Zaragoza) (ES); VICENTE BRUALLA, Sergio, 50840 San Mateo de Gállego (Zaragoza) (ES)
(74) Representative: Ungria López, Javier
(86) International application number: PCT/ES2022/070302
(87) International publication number: WO 2022/248748

(56) References cited:
- CN-A- 106 759 183
- CN-A- 110 482 337
- CN-B- 103 350 932
- KR-A- 20130 013 622
- US-A- 4 211 376
- US-A- 4 583 714
- US-A1- 2007 075 302

## Description

### Object of the invention

The present invention relates to a support device for a reel that has a container configuration on the outside, in the inner space of which the reel is located on which an inflatable sleeve or barrier is wound to be used, for example, in a port terminal or beach, when there are accidental fuel spills. When the time comes, the inner space of the device is accessed, unrolling the inflatable sleeve or barrier by rotating the reel, which is carried out by activating a first mechanism that transmits movement, integrated into the reel itself. In addition, the device includes a second mechanism that transmits movement to be able to rotate a reel support to place it in the most appropriate orientation. The device of the invention integrates a hydraulic-oil control unit to provide hydraulic power to the device.

### Technical problem to be solved and background of the invention

Currently, reels are in some cases mounted on a support fixed to the base of a container comprising hinged doors that open outwards. When installed in the intended placement, this container and reel assembly mounted on its support implies a loss of additional space around the container due to the need to foresee said additional space to be able to open the hinged doors. In other words, to open the container, that additional sweeping space is required to be able to open the doors outwards.

Container doors are installed coinciding with one of the side walls of the container. Therefore, the location of the assembly formed by the container and the reel mounted on its support must be chosen in advance taking into account the side wall of the container where the hinged doors are located.

This type of reels is intended for rolling up inflatable sleeves or barriers that are used on beaches when there are accidental fuel spills, for example.

The rotation of the reel is carried out by means of a gearmotor assembly installed in coincidence with one of the two opposite sides or ends of the reel, so that said gearmotor assembly protrudes with respect to said side of the reel. This implies the need for more space inside the container and therefore a larger size of said container.

Another drawback is that the reel support is a fixed element and therefore it is not possible to rotate the support with the reel to change its orientation if required in order to be able to unroll the product more comfortably.

CN 103 350 932 B discloses a support device for a reel wherein the support is such a fixed element. The rotation of the reel is carried out by means of a hydraulic motor system.

KR 2013 0013622 A discloses a support device for a reel with a rotatable support.

### Description of the invention

In order to achieve the objectives and avoid the drawbacks mentioned in the previous sections, the invention proposes a support device for a reel. In this device, the reel is held on a support comprising an upper base and two opposing bridges. A tubular shaft of the reel is coupled by its ends between said bridges. The reel is able to rotate due to a first mechanism that transmits the rotary movement of the reel.

The device of the invention comprises a hydraulic-oil control unit integrated into a fixed bottom base and which is configured to provide hydraulic energy to the device to provide rotary movement to at least the reel.

The upper base of the support is coupled in parallel to the fixed bottom base. This coupling comprises a centred articulated connection that allows the support to rotate in both directions of rotation around an imaginary centred vertical axis. The device also comprises a second mechanism that transmits the rotary movement of the support.

The device comprises a protective enveloping structure configured to be removably fixed onto the upper base of the support.

The first rotary movement transmitting device is located inside the space delimited between the two bridges, opposite to the upper base of the support, arranged in proximity to one of the bridges and without protruding outwards from said bridge.

The hydraulic-oil control unit is fixed to the fixed bottom base and located within the inner space delimited by the enveloping structure. The hydraulic-oil control unit is configured to power a hydraulic gearmotor that makes up the first rotary movement transmitting device of the reel, and configured to power a hydraulic cylinder that makes up the second rotary movement transmitting device of the support about the imaginary vertical axis. Preferably the hydraulic gearmotor comprises a hydraulic motor and a gear.

The hydraulic cylinder (second rotary movement transmitting device of the support) is connected by a first end to the fixed bottom base by means of a first articulated connection, and by a second end, opposite to the first end, connects to the upper base of the support by means of a second articulated connection.

The hydraulic gearmotor is fixed to the support bridge by means of an intermediate flange screwed to said bridge. The intermediate flange comprises a tubular body with one end edge with an outer wing and another end edge with an internal wing.

The intermediate flange is fixed to the bridge by the outer wing of its tubular body, which passes through a hole in the bridge, occupying part of the inner space delimited between the two bridges of the support.

The hydraulic motor is housed inside the internal hollow delimited by the tubular body of the intermediate flange and is screwed to the gear.

The gear is housed in an end section of the interior of the tubular shaft of the reel. The transmission of the rotary movement to the reel is carried out through an output element of the gear that is screwed to an internal ring that forms part of the tubular shaft of the reel.

A first end of the reel comprises a shoulder configured to couple a bearing adjusted in the hole of one of the two bridges of the support. Said first end of the reel is opposite to a second end of the reel arranged in correspondence with the hydraulic gearmotor.

The enveloping structure is coupled to the upper base of the support by means of anchors formed by male elements and female elements, configured to be joined to one another by means of tongue and groove.

The contred articulated connection between the upper base of the support and the fixed bottom base is a bearing crown that is complemented by first arched tracks solidly attached to the upper base and second arched tracks solidly attached to the fixed bottom base. The first arched tracks and the second tracks are in contact with each other and are equidistant from the imaginary centred vertical axis.

The upper base of the support comprises a framework comprising a perimeter rectangular frame and reinforcement profiles, to which the first arched tracks are attached, and a first centred flat part to which a portion of the centred articulated connection is attached. Said first centred flat part has a through opening. In addition, coinciding with the entirety of one of the two faces of the upper base of the support (the one opposite the face on which the first arched tracks are), a sheet metal structure is located by way of a floor as a means of protection.

The fixed bottom base comprises a framework that includes a perimeter rectangular frame and reinforcement profiles, to which the second arched tracks are attached, and also a second centred flat part to which a portion of the centred articulated connection is attached. Said centred flat part has a through opening and, in addition, coinciding with the face of the fixed bottom base on which the second arched tracks are located, protective metal plates are also located.

The device further comprises control means for remote control of the hydraulic-oil control unit as well as of the first and second rotary movement transmitting devices.

The enveloping structure comprises a prismatic configuration with its edges formed by profiles that make up a framework. Two larger side faces of the enveloping structure include roller blinds, while two smaller side faces of the enveloping structure each comprise a removable bottom door, an intermediate side wall portion, and an upper side wall portion. The lower door and the upper side wall portion preferably comprise ventilation grilles.

An upper face of the enveloping structure is a roof comprising two diagonal reinforcement profiles, the ends of which open out at the four corners of said roof, and hooks are located at said corners. A lower face of the enveloping structure is a hollow space delimited by four profiles that form part of the framework of the enveloping structure.

The hydraulic-oil control unit comprises a motor element selected between an electric engine and an internal combustion engine; wherein said motor element is configured to transmit a rotary movement to a hydraulic pump that is part of the hydraulic-oil control unit.

The device of the invention comprises an electrical connection, located on the fixed bottom base, which is configured to connect an electrical supply to power the hydraulic-oil control unit, when it is driven by an electric engine.

The device of the invention disclosed is a solution that requires less steel material, since in the classic solution the floor of the container and the floor of the reel are redundant. Therefore, by consuming fewer resources, the device is more environmentally-friendly, and also more economical, in terms of steel consumption.

This solution is also completely compact since the device must simply be placed in the port terminal, or place of use, provide the electrical supply (for the *powerpack or hydraulic-oil control unit)* when the driving element of the hydraulic-oil control unit is an electric engine, and use same directly at the appropriate time. It is not necessary to install any other device or additional elements besides the device of the invention.

The great advantage of this improved version of the device is better space utilisation. It also allows increasing the useful space available inside the device by 15%-20%. In this way, it is possible to stow more metres of inflatable sleeve or barrier in the same volume of inner space delimited by the enveloping structure, compared to a classic system.

Another advantage is that the device of the invention, by having a rolling door, requires much less free space around same than a classic containerised solution, which requires space free of obstacles around same to allow the container doors to be opened.

To help better understand this specification, and as an integral part thereof, a series of figures is attached, in which the object of the invention is depicted in an illustrative and non-limiting manner.

### Brief description of the figures

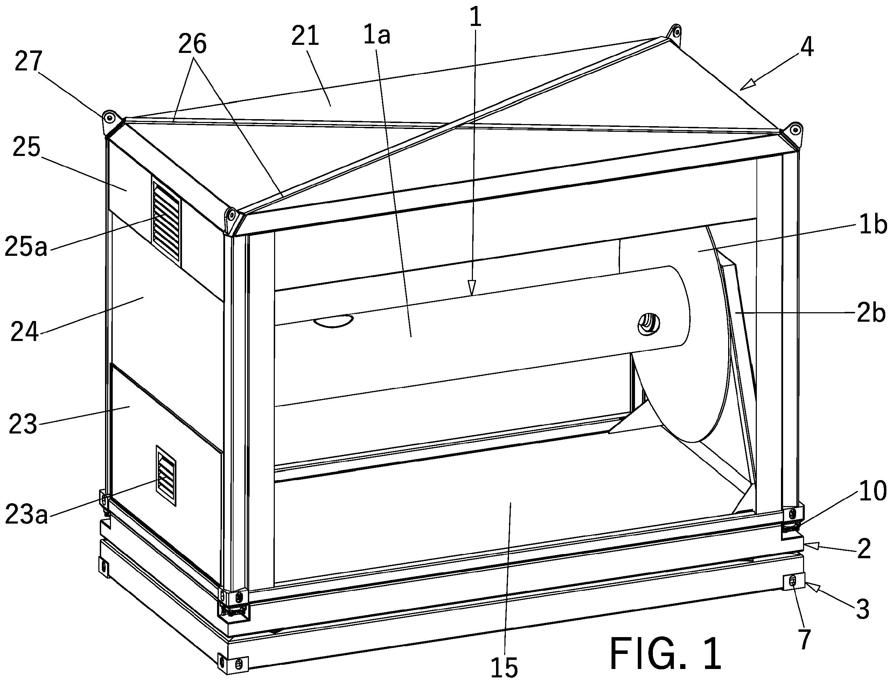

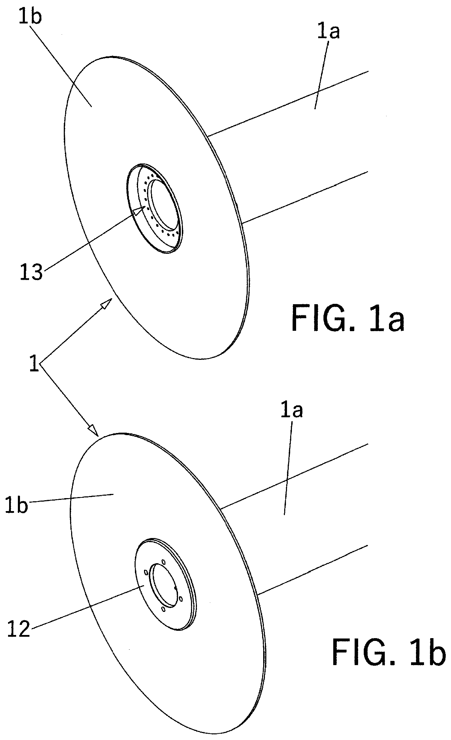

Figure 1 shows a perspective view of the support device for a reel object of the invention.
Figures 1a-b show perspective views of each of the end sections of the reel.

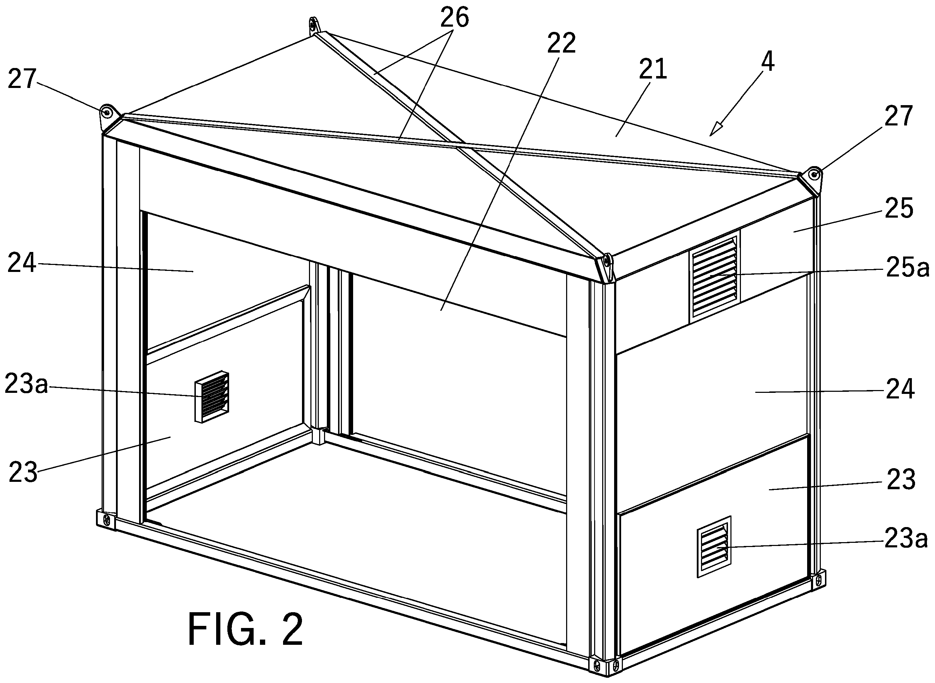

Figure 2 shows a perspective view of the enveloping structure of the device of the invention.
Figures 3a-b show perspective views of a support of a reel from two different angles.

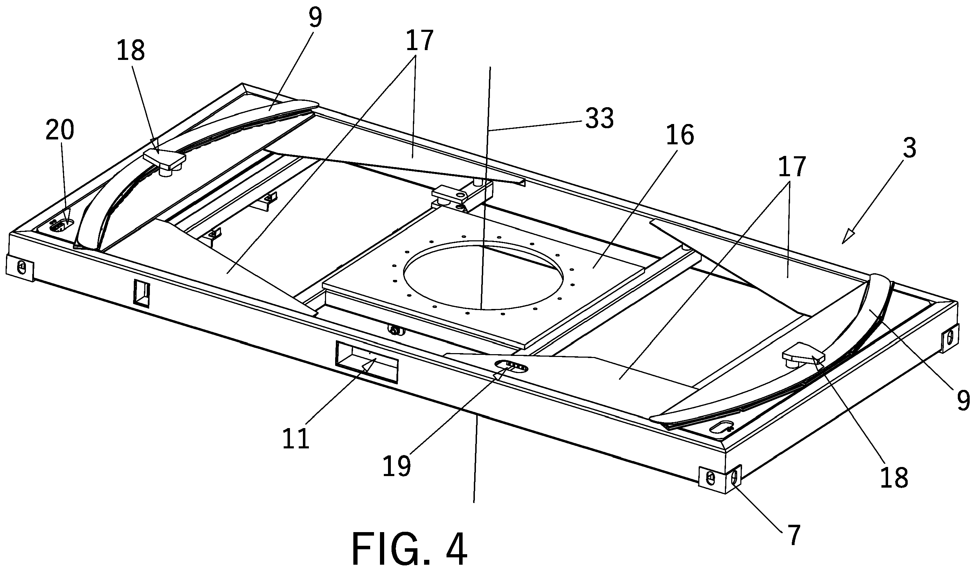

Figure 4 shows a perspective view of the fixed bottom base on which the support for a reel is coupled by means of an articulated connection.

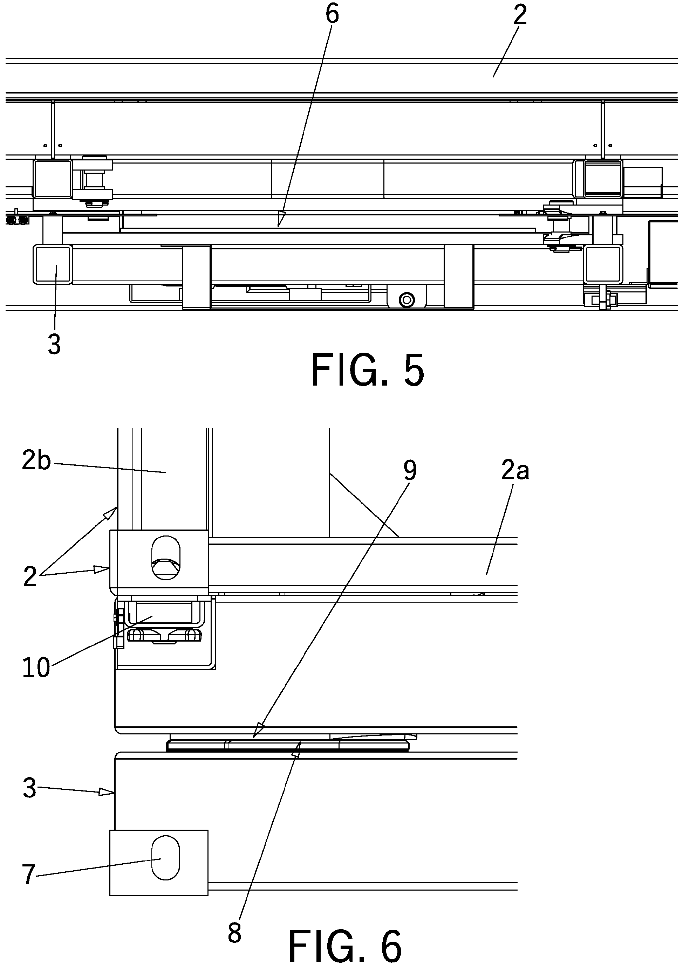

Figure 5 shows a front view of the coupling between the support of a reel and the fixed bottom base where the centred articulated connection is observed.
Figure 6 shows a view similar to that of Figure 5 where arched tracks are observed that are in contact with each other and that form part of the fixed bottom base and the support of the reel.

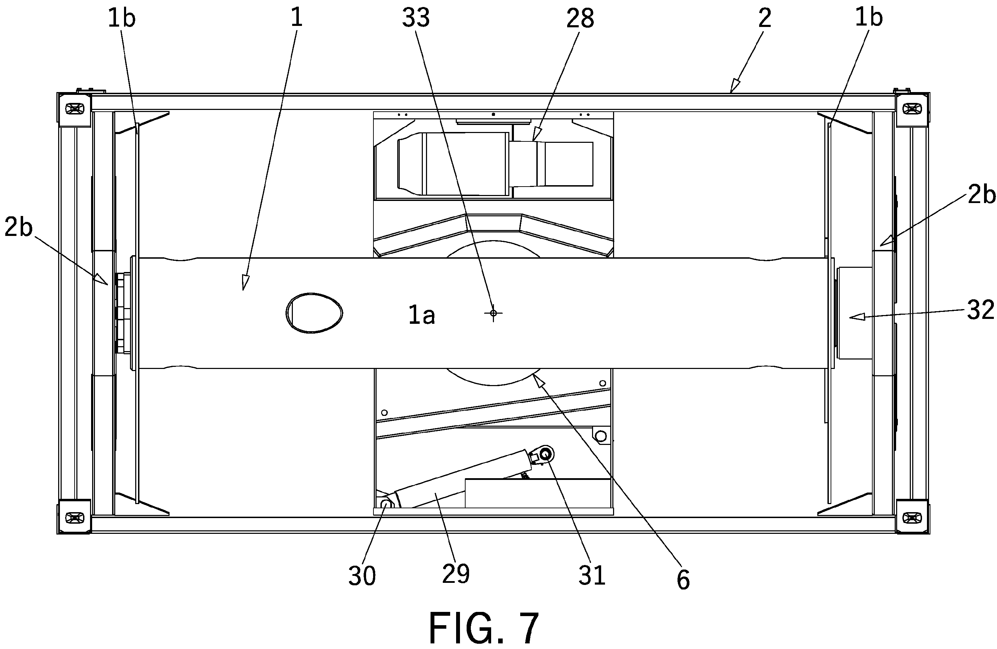

Figure 7 shows an upper view of the fixed bottom base assembly that supports a hydraulic-oil control unit and the support of the reel.
Figure 8 shows a cross-sectional front view showing the hydraulic gearmotor configured to rotate the reel.
Figure 9 shows a view of an intermediate flange on which the hydraulic geared motor is fixed to the reel support bridge.

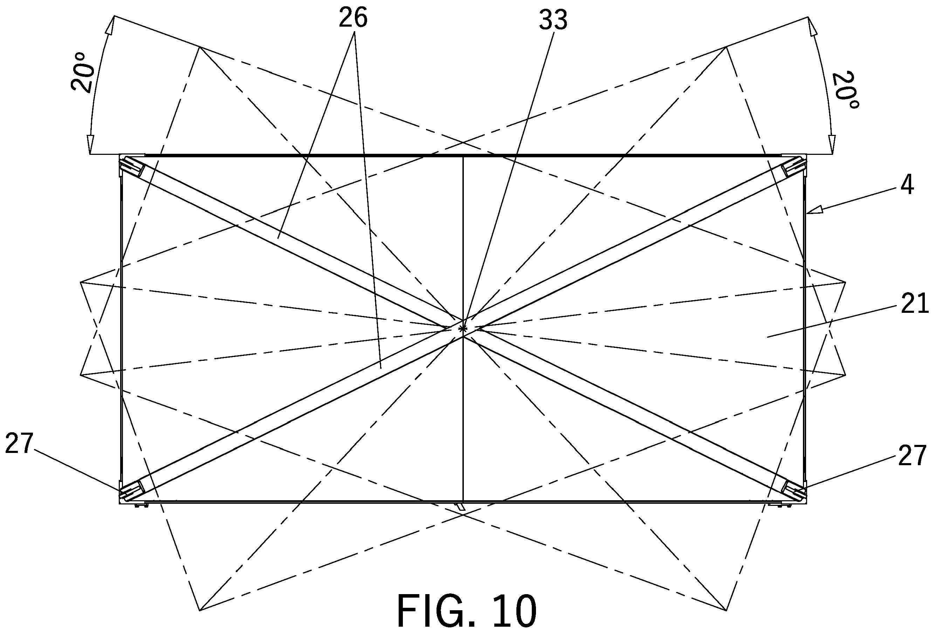

Figure 10 shows a plan view of the device of the invention, indicating different positions that the reel support set can adopt and the enveloping structure to which said support is fixed.

### Description of an exemplary embodiment of the invention

Considering the numbering adopted in the figures, the support device for a reel 1 comprises a support 2, a fixed bottom base 3 of rectangular shape and an enveloping structure 4 that is fixed on the support 2. With this configuration described, within said enveloping structure 4 the reel 1 is housed formed by a tubular shaft 1a and two circular collateral discs 1b solidly attached to said tubular shaft 1a. The enveloping structure 4 protects the elements it contains within against inclement weather.

The support 2 comprises a rectangular upper base 2a and side bridges 2b facing each other. The reel 1 is coupled to said bridges 2b able to rotate, so that a first end of the reel 1 is coupled to the respective lateral bridge 2b by means of a bearing, while a second end of the reel 1, opposite to the first end, is connected to a hydraulic gearmotor 5 by means of which rotary movement is transmitted to the reel 1.

The device of the invention also comprises a hydraulic-oil control unit integrated into the fixed bottom base (3). The hydraulic-oil control unit is configured to provide hydraulic energy to the device to provide rotary movement to at least the reel 1.

The upper base 2a of the support 2 is coupled to the fixed bottom base 3 by means of a centred articulated connection 6, which can be, for example, a bearing crown. The upper base 2 rests on the fixed bottom base 3 coinciding with a horizontal plane on which said upper base 2 can rotate with respect to the fixed bottom base 3, which remains static. Furthermore, the fixed bottom base (3) can be fixed to the ground using first anchors 7 located in the corner areas of the fixed bottom base 3.

The upper base 2a of the support 2 rests on the fixed bottom base 3 through first arched tracks 8 (which can be made of bronze or steel), solidly attached to the upper base 2a, and through second arched tracks 9 (which can be made of bronze or steel) solidly attached to the fixed bottom base 3. The first arched tracks 8 and the second arched tracks 9 are in contact with each other and are equidistant from an imaginary centred vertical axis 33 located at the centre of the articulated connection 6.

Thus, the assembly formed by the support 2, the reel 1 and the enveloping structure 4 can rotate, due to the centred articulated connection 6, at least 20° for each side. Therefore, the rotation of said assembly will have at least an angular amplitude of 40°. The enveloping structure 4 is fixed to the upper base 2a of the support 2 by means of second anchors 10 formed by male elements and female elements, such as, for example, twist locks, wherein the male elements fit inside the female elements.

The hydraulic-oil control unit 28 comprises a motor element selected between an electric motor and an internal combustion engine; wherein said motor element is configured to transmit a rotary movement to a hydraulic pump that forms part of the hydraulic-oil control unit 28.

When the hydraulic-oil control unit 28 incorporates the electric engine, the fixed bottom base 3 comprises an electrical connection 11 configured to be able to connect an electrical supply to power said electric engine.

The first end of the reel 1 includes an annular projection 12 to fix the bearing that facilitates the rotation of the reel 1. The second end of the reel 1 includes an internal ring 13 to be able to transmit the rotary movement to said reel 1 by means of the hydraulic gearmotor 5, as will be described later.

The upper base 2a of the support 2 comprises a framework comprising a perimeter rectangular frame and reinforcement profiles, to which the first arched tracks 8 are attached and also a first centred flat part 14 to which a portion of the articulated connection 6 is attached. The first centred flat part 14 has a through opening.

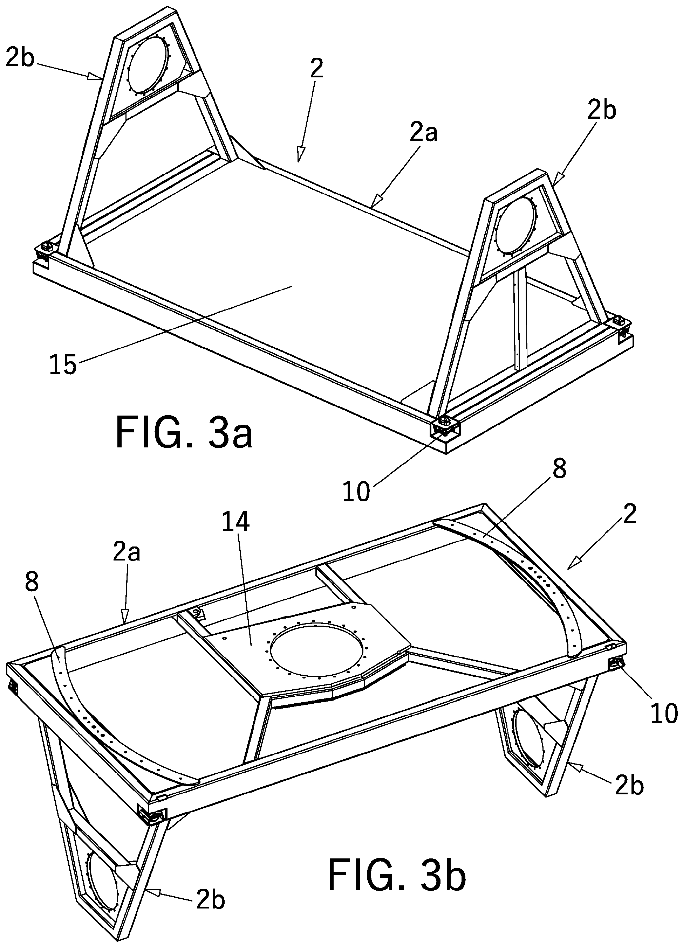

The side bridges 2b of the support 2 (figure 3a) comprise two plates with separate holes aligned in coincidence with which the bearing and the hydraulic gearmotor 5 associated with the ends of the reel 1 are located. The hydraulic gearmotor 5 is fixed to the respective side bridge 2b coinciding with the plate that forms said side bridge 2b.

Coinciding with the entire face of the upper base 2a of the support 2 opposite to the face on which the first arched tracks 8 are located, a sheet metal structure 15 is located by way of a floor, as a means of protection.

The fixed bottom base 3 comprises a framework comprising a perimeter rectangular frame and reinforcement profiles, to which the second arched tracks 9 are attached and also a second centred flat part 16 to which a portion of the articulated connection 6 is attached and having a through opening. Coinciding with the face of the fixed bottom base 3 on which the second arched tracks 9 are located, protection metal sheets 17 are also located to prevent entrapment of members of a user's extremities during the use of the device of the invention.

Coinciding with centred points of the second tracks 9 of the fixed bottom base 3, anti-oscillation plates 18 are located to ensure the rotation of the support 2. Each anti-oscillation plate 18 is a safety element to protect the articulated connection 6 against unwanted movements of the support 2 with respect to the fixed bottom base 3, as well as maintaining the correct position between the arched tracks 8 and 9 during the rotation of the support 2.

The fixed bottom base 3 also comprises lubricators 19, 20 to be able to lubricate the articulated connection 6 and also the contact surface of the first 8 and second 9 arched tracks. Said first and second arched tracks 8, 9 are fixed on other end plates attached to the frames of the fixed bottom base 3 and upper base 2a of the support 2.

The enveloping structure 4 has an appropriate container design to protect all the elements housed in its inner space. Preferably said enveloping structure 4 comprises a prismatic configuration, with two opposite larger side faces, two opposite smaller side faces, and two opposite side faces: upper and lower, which correspond to a roof 21 and hollow floor of the enveloping structure 4.

The edges of the prismatic configuration correspond to profiles that make up a framework, while coinciding with the two largest lateral faces, the enveloping structure 4 comprises roller blinds 22 to be able to comfortably access the reel 1 when said roller blinds are retracted. Coinciding with each of the smaller side faces, the enveloping structure 4 comprises a removable lower door 23, an intermediate side wall portion 24, and an upper side wall portion 25. In an exemplary embodiment, the upper side wall 25 and the lower door 23 comprise ventilation grilles 23a, 25a.

The roof 21 of the enveloping structure 4 comprises two diagonal reinforcement profiles 26 the ends of which lead into the four corners of the roof 21 where hooks 27 are located to be able to lift and manipulate the device of the invention with a crane.

Lastly, the floor of the enveloping structure 4 is a hollow space delimited by four profiles that form part of its framework.

Inside the enveloping structure 4 and fixed to the fixed bottom base 3, there is a hydraulic-oil control unit 28 to be able to supply oil to the hydraulic gearmotor 5 that rotates the reel 1, and also to a hydraulic cylinder 29 to rotate the support 2 around the articulated connection 6 in one or the other direction of rotation. As previously described, each direction of rotation is intended to substantially span 20°.

To do this, the hydraulic cylinder 29 is connected at one end to the fixed bottom base 3 by means of a first articulated connection 30, while a second end (opposite to the first end) of the hydraulic cylinder 29 connects with the upper base 2a of the support 2 by means of a second articulated connection 31.

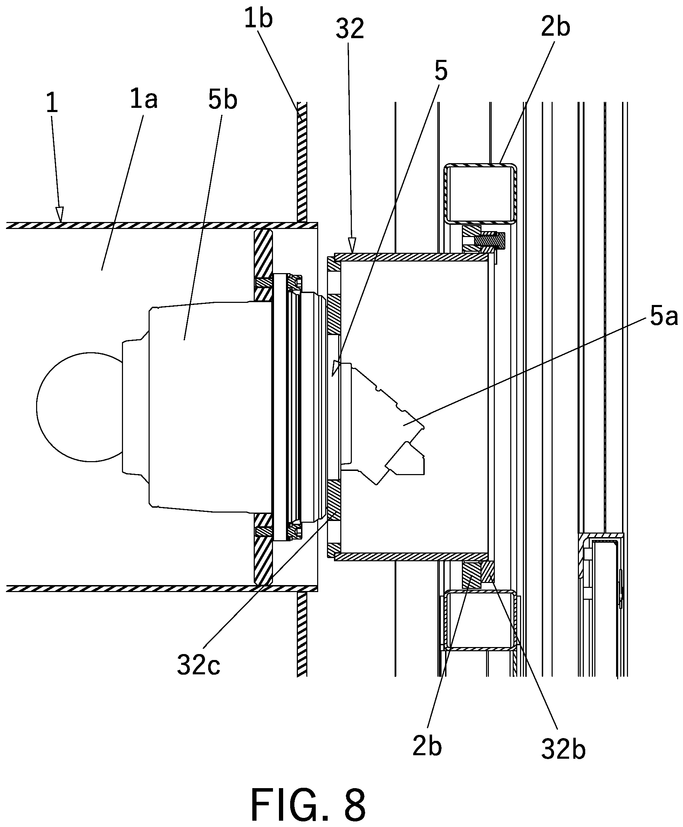

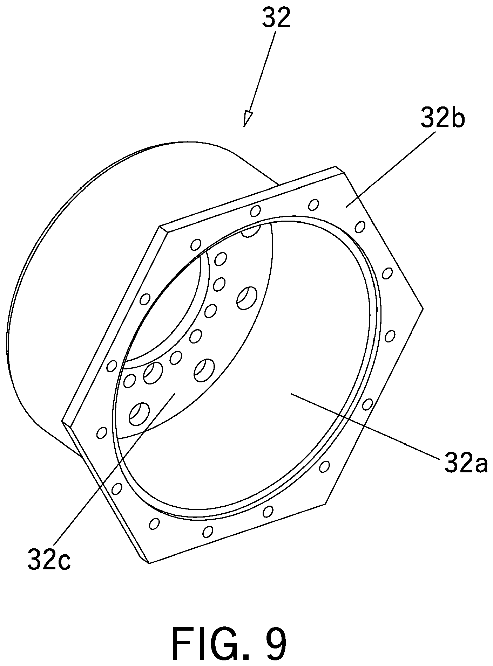

As shown more clearly in Figure 8, the hydraulic gearmotor assembly 5 is fixed to the bridge 2b of the support 2 by means of an intermediate flange 32 screwed to the plate of said bridge 2b. As shown in Figure 9, said intermediate flange 32 comprises a tubular body 32a, one of the end edges of which comprises an outer wing 32b and another of the end edges of which comprises an internal wing 32c. Said intermediate flange 32 is fixed to the bridge 2b by means of the outer wing 32b.

The tubular body 32a of the fixing flange 32 passes through the hole of the bridge 2 to align with the internal space of the tubular shaft 1a of the reel 1.

The hydraulic gearmotor assembly 5 comprises a hydraulic motor 5a and a gear 5b, so that the hydraulic motor 5a is housed inside the internal hollow delimited by the tubular body 32a of the intermediate flange 32. Likewise, the hydraulic motor 5a is screwed to the gear 5b.

The gear 5b is housed in an end section of the interior of the tubular shaft 1a of the reel 1, so that to transmit the rotary movement to the reel 1, a projecting element of said gear 5b is screwed to the internal ring 13 that forms part of the tubular shaft 1a of the reel 1.

Thus, in order to save space around the support assembly 2, the accessory intermediate flange 32 is used to allow the hydraulic gearmotor assembly 5 to be inserted inside the tubular shaft 1a of the rotary reel 1.

Currently, reels are assembled with the gearmotor assembly coming out of the support structure, which implies a loss of storage space when it is inserted into the container.

With the proposed device of the invention, by introducing the hydraulic gearmotor assembly 5 inside the tubular shaft 1a, better use of the storage space is achieved, as well as the optimisation of the dimensions of the device.

By comprising the roller blinds 22, no external space is required around the door to open the doors, which is another advantage over the reels 1 that go inside conventional maritime containers.

As previously mentioned, inside the enveloping structure 4 the hydraulic-oil control unit 28 is mounted which, through the hydraulic energy generated thereby, allows the rotation of both the reel 1 and the support 2 that holds the reel 1. The rotation can be carried out with the enveloping structure 4 positioned on the upper base 2a that forms part of the support 2, or with said enveloping structure 4 disassembled. This facilitates the deployment and collection of the devices that are wound on the tubular shaft 1a of the reel 1.

The electrical supply, through the electrical connection 11, in the case of using a hydraulic-oil control unit driven by an electric engine, provides the current required for the operation of the assembly (rotation of the support 2 and/or rotation of the reel 1), highlighting that It is the only connection point of the device of the invention with the outside. In this way, the system is prevented from having numerous hydraulic hoses around, with the dangers that this could entail.

## Claims

1. A support device for a reel, wherein the reel (1) is held on a support (2) comprising an upper base (2a) and two bridges (2b) facing each other, a tubular shaft (1a) of the reel (1) being coupled by its ends to the bridges, the reel (1) being able to rotate by means of a first rotary movement transmitting device; wherein the support device comprises a hydraulic-oil control unit (28) integrated into a fixed bottom base (3), wherein the hydraulic-oil control unit (28) is configured to provide hydraulic energy to the device to provide rotary movement to at least the reel (1); and the upper base (2a) of the support (2) is coupled in parallel to the fixed bottom base (3); wherein said coupling comprises a centred articulated connection (6) that allows the support (2) to rotate, with respect to the fixed bottom base (3), in both directions of rotation around an imaginary centred vertical axis (33); further comprising a second rotary movement transmitting device of the support (2); and the support device comprises a protective enveloping structure (4) configured to be removably fixed on the upper base (2a) of the support (2); and the first rotary movement transmitting device of the reel (1) is located inside the space delimited between the two bridges (2b), in opposition to the upper base (2a) of the support (2), in proximity to one of said bridges (2b) and without protruding outwards therefrom; and the hydraulic-oil control unit (28) is fixed to the fixed bottom base (3) and located within the inner space delimited by the enveloping structure (4); wherein said hydraulic-oil control unit (28) is configured to power a hydraulic gearmotor (5) that makes up the first rotary movement transmitting device of the reel (1), and to power a hydraulic cylinder (29) that makes up a second rotary movement transmitting device of the support (2) about the imaginary vertical axis (33); and wherein the hydraulic gearmotor (5) comprises a hydraulic motor (5a) and a gear (5b).

2. The support device for a reel, according to claim 1, **characterised in that** the hydraulic cylinder (29) is connected by a first end to the fixed bottom base (3) by means of a first articulated connection (30), while a second end of the hydraulic cylinder (29), opposite to the first end, connects with the upper base (2a) of the support (2) by means of a second articulated connection (31).

3. The support device for a reel, according to any one of claims 1 or 2, **characterised in that**:
- the hydraulic gearmotor (5) is fixed to a bridge (2b) of the support (2) by means of an intermediate flange (32) screwed to said bridge (2b); wherein said intermediate flange (32) comprises a tubular body (32a), one of the end edges of which comprises an outer wing (32b), while the other end edge of the tubular body (32a) comprises an inner wing (32c); wherein the intermediate flange (32) is fixed to the bridge (2b) by means of the outer wing (32b); and wherein the tubular body (32a) of the intermediate flange (32) passes through a hole in the bridge (2b) occupying part of the inner space delimited between the two bridges (2b) of the support (2);
- the hydraulic motor (5a) is housed inside the internal hollow delimited by the tubular body (32a) of the intermediate flange (32); wherein said hydraulic motor (5a) is screwed to the gear (5b);
- the gear (5b) is housed in an end section of the interior of the tubular shaft (1a) of the reel (1); wherein to transmit the rotary movement to the reel (1), an output element of said gear (5b) is screwed to an internal ring (13) that forms part of the tubular shaft (1a) of the reel (1).

4. The support device for a reel, according to claim 1, **characterised in that** a first end of the reel (1) comprises a projection (12) configured to couple a bearing fitted in the hole of one of the two bridges (2b) of the support (2); wherein said first end is opposite to a second end of the reel (1) that corresponds to the location of the hydraulic gearmotor (5).

5. The support device for a reel, according to claim 1, **characterised in that** the enveloping structure (4) is coupled to the upper base (2a) of the support (2) by means of anchors (10) formed by male elements and female elements; wherein the male elements fit inside the female elements.

6. The support device for a reel, according to claim 1, **characterised in that** the articulated connection (6) centred between the upper base (2a) of the support (2) and the fixed bottom base (3) is a bearing crown comprising first arched tracks (8) solidly attached to the upper base (2a) and second arched tracks (9) solidly attached to the fixed bottom base (3); wherein both arched tracks (8, 9) are in contact with each other and are equidistant from the imaginary centred vertical axis (33).

7. The support device for a reel, according to claim 6, **characterised in that** the upper base (2a) of the support (2) comprises a framework comprising a perimeter rectangular frame and reinforcement profiles, to which the first arched tracks (8) are attached, and also a first centred flat part (14) to which a portion of the centred articulated connection (6) is attached; wherein said centred flat part (14) has a through opening; and coinciding with the face of the upper base (2a) of the support (2) opposite to the face on which the first arched tracks (8) are located, a sheet metal structure (15) is located.

8. The support device for a reel, according to claim 6, **characterised in that** the fixed bottom base (3) comprises a framework comprising a perimeter rectangular frame and reinforcement profiles, to which the second arched tracks (9) are attached, and also a second centred flat part (16) to which a portion of the centred articulated connection (6) is attached; wherein said second centred flat part (16) has a through opening, and coinciding with the face of the fixed bottom base (3) in which the second arched tracks (9) are located, protection metal sheets (17) are also located.

9. The support device for a reel, according to claim 1, **characterised in that** it comprises control means for remote control of the hydraulic-oil control unit (28) and of the first and second rotary movement transmitting devices.

10. The support device for a reel, according to claim 1, **characterised in that** the enveloping structure (4) comprises a prismatic configuration with its edges formed by profiles that make up a framework; wherein
- two larger side faces of the enveloping structure (4) comprise rolling blinds (22);
- two smaller side faces of the enveloping structure (4), each of which comprises a removable lower door (23), an intermediate side wall portion (24) and an upper side wall portion (25); wherein the lower door (23) and the upper side wall portion (25) comprise ventilation grilles (23a, 25a);
- an upper face of the enveloping structure (4) is a roof (21) comprising two diagonal reinforcement profiles (26), the ends of which lead into the four corners of said roof (21) in which hooks (27) are located;
- a lower face of the enveloping structure (4) is a hollow space delimited by four profiles that form part of the framework of the enveloping structure (4).

11. The support device for a reel, according to any one of the preceding claims, **characterised in that** the hydraulic-oil control unit (28) comprises a motor element selected between an electric engine and an internal combustion engine; wherein said motor element is configured to transmit a rotary movement to a hydraulic pump that is part of the hydraulic-oil control unit (28).

12. The support device for a reel, according to claim 11, **characterised in that** it comprises an electrical connection (11) located in the fixed bottom base (3) configured to connect an electrical supply to power the hydraulic-oil control unit when it is powered by an electric engine, located on the fixed bottom base (3).

## Patentansprüche

1. Trägervorrichtung für eine Haspel, wobei die Haspel (1) auf einem Träger (2) gehalten wird, umfassend eine obere Basis (2a) und zwei einander gegenüberliegende Brücken (2b), wobei eine Rohrwelle (1a) der Haspel (1) mit ihren Enden an die Brücken gekoppelt ist, wobei sich die Haspel (1) mittels einer ersten Drehbewegungs-Übertragungsvorrichtung drehen kann;
wobei die Trägervorrichtung eine Hydrauliköl-Steuereinheit (28) umfasst, die in eine feste untere Basis (3) integriert ist, wobei die Hydrauliköl-Steuereinheit (28) zum Versorgen der Vorrichtung mit Hydraulikenergie ausgebildet ist, um zumindest die Haspel (1) in eine Drehbewegung zu versetzen; und die obere Basis (2a) des Trägers (2) parallel mit der festen unteren Basis (3) gekoppelt ist; wobei die Kopplung eine zentrierte Gelenkverbindung (6) umfasst, die es dem Träger (2) ermöglicht, sich in Bezug auf die feste untere Basis (3) in beiden Drehrichtungen um eine imaginäre zentrierte vertikale Achse (33) zu drehen; ferner umfassend eine zweite Drehbewegungs-Übertragungsvorrichtung des Trägers (2); und die Trägervorrichtung eine schützende Umhüllungsstruktur (4) umfasst, dazu ausgebildet, abnehmbar an der oberen Basis (2a) des Trägers (2) befestigt zu werden; und die erste Drehbewegungs-Übertragungsvorrichtung der Haspel (1) innerhalb des zwischen den beiden Brücken (2b) begrenzten Raums gegenüber der oberen Basis (2a) des Trägers (2) in der Nähe von einer der Brücken (2b) angeordnet ist, ohne von dieser nach außen vorzustehen; und die Hydrauliköl-Steuereinheit (28) an der festen unteren Basis (3) befestigt und im von der Umhüllungsstruktur (4) begrenzten Innenraum angeordnet ist; wobei die Hydrauliköl-Steuereinheit (28) zum Antreiben eines Hydraulikgetriebemotors (5), der die erste Drehbewegungs-Übertragungsvorrichtung der Haspel (1) bildet, und zum Antreiben eines Hydraulikzylinders (29), der eine zweite Drehbewegungs-Übertragungsvorrichtung des Trägers (2) um die imaginäre vertikale Achse (33) bildet, ausgebildet ist; und wobei der Hydraulikgetriebemotor (5) einen Hydraulikmotor (5a) und ein Getriebe (5b) umfasst.

2. Trägervorrichtung für eine Haspel nach Anspruch 1, **dadurch gekennzeichnet, dass** der Hydraulikzylinder (29) mit einem ersten Ende über eine erste Gelenkverbindung (30) mit der festen unteren Basis (3) verbunden ist, während ein zweites Ende des Hydraulikzylinders (29) gegenüber dem ersten Ende über eine zweite Gelenkverbindung (31) mit der oberen Basis (2a) des Trägers (2) verbunden ist.

3. Trägervorrichtung für eine Haspel nach Anspruch 1 oder 2, **dadurch gekennzeichnet, dass**:
- der Hydraulikgetriebemotor (5) an einer Brücke (2b) des Trägers (2) mittels eines Zwischenflansches (32) befestigt ist, der an die Brücke (2b) geschraubt ist; wobei der Zwischenflansch (32) einen Rohrkörper (32a) umfasst, von dem eine Endkante einen Außenflügel (32b) umfasst, während die andere Endkante des Rohrkörpers (32a) einen Innenflügel (32c) umfasst; wobei der Zwischenflansch (32) mittels des Außenflügels (32b) an der Brücke (2b) befestigt ist; und wobei der Rohrkörper (32a) des Zwischenflansches (32) durch ein Loch in der Brücke (2b) verläuft, das einen Teil des Innenraums einnimmt, der zwischen den zwei Brücken (2b) des Trägers (2) begrenzt ist;
- der Hydraulikmotor (5a) innerhalb des durch den Rohrkörper (32a) des Zwischenflansches (32) begrenzten inneren Hohlraums angeordnet ist; wobei der Hydraulikmotor (5a) an das Getriebe (5b) geschraubt ist;
- das Getriebe (5b) in einem Endabschnitt des Inneren der Rohrwelle (1a) der Haspel (1) angeordnet ist; wobei zur Übertragung der Drehbewegung auf die Haspel (1) ein Ausgangselement des Getriebes (5b) an einen Innenring (13) geschraubt ist, der einen Teil der Rohrwelle (1a) der Haspel (1) bildet.

4. Trägervorrichtung für eine Haspel nach Anspruch 1, **dadurch gekennzeichnet, dass** ein erstes Ende der Haspel (1) einen Vorsprung (12) umfasst, ausgebildet zum Koppeln eines Lagers, das in das Loch von einer der zwei Brücken (2b) des Trägers (2) eingesetzt ist; wobei das erste Ende einem zweiten Ende der Haspel (1) gegenüberliegt, das der Position des Hydraulikgetriebemotors (5) entspricht.

5. Trägervorrichtung für eine Haspel nach Anspruch 1, **dadurch gekennzeichnet, dass** die Umhüllungsstruktur (4) mit der oberen Basis (2a) des Trägers (2) mittels Anker (10) gekoppelt ist, die aus Steck- und Buchsenelementen bestehen, wobei die Steckelemente in die Buchsenelemente passen.

6. Trägervorrichtung für eine Haspel nach Anspruch 1, **dadurch gekennzeichnet, dass** die Gelenkverbindung (6), die zwischen der oberen Basis (2a) des Trägers (2) und der festen unteren Basis (3) zentriert ist, ein Lagerkranz ist, der erste bogenförmige Bahnen (8), die fest an der oberen Basis (2a) angebracht sind, und zweite bogenförmige Bahnen (9), die fest an der festen unteren Basis (3) angebracht sind, umfasst; wobei beide bogenförmige Bahnen (8, 9) in Kontakt miteinander stehen und von der imaginären zentrierten vertikalen Achse (33) gleich weit entfernt sind.

7. Trägervorrichtung für eine Haspel nach Anspruch 6, **dadurch gekennzeichnet, dass** die obere Basis (2a) des Trägers (2) einen Rahmen umfasst, umfassend einen rechtwinkligen Umfangsrahmen und Verstärkungsprofile, an denen die ersten bogenförmigen Bahnen (8) befestigt sind, und ebenfalls einen ersten zentrierten flachen Teil (14), an dem ein Abschnitt der zentrierten Gelenkverbindung (6) befestigt ist; wobei der zentrierte flache Teil (14) eine Durchgangsöffnung aufweist; und übereinstimmend mit der Fläche der oberen Basis (2a) des Trägers (2), die der Fläche, auf der sich die ersten bogenförmigen Bahnen (8) befinden, gegenüberliegt, eine Blechstruktur (15) angeordnet ist.

8. Trägervorrichtung für eine Haspel nach Anspruch 6, **dadurch gekennzeichnet, dass** die feste untere Basis (3) einen Rahmen umfasst, umfassend einen rechtwinkligen Umfangsrahmen und Verstärkungsprofile, an denen die zweiten bogenförmigen Bahnen (9) befestigt sind, und ebenfalls einen zweiten zentrierten flachen Teil (16), an dem ein Abschnitt der zentrierten Gelenkverbindung (6) befestigt ist; wobei der zweite zentrierte flache Teil (16) eine Durchgangsöffnung aufweist; und übereinstimmend mit der Fläche der festen unteren Basis (3), in der sich die zweiten bogenförmigen Bahnen (9) befinden, ebenfalls Schutzbleche (17) angeordnet sind.

9. Trägervorrichtung für eine Haspel nach Anspruch 1, **dadurch gekennzeichnet, dass** sie Steuermittel zur Fernsteuerung der Hydrauliköl-Steuereinheit (28) und der ersten und zweiten Drehbewegungs-Übertragungsvorrichtung umfasst.

10. Trägervorrichtung für eine Haspel nach Anspruch 1, **dadurch gekennzeichnet, dass** die Umhüllungsstruktur (4) eine prismenförmige Konfiguration umfasst, deren Ränder durch Profile gebildet werden, die einen Rahmen bilden; wobei
- zwei größere Seitenflächen der Umhüllungsstruktur (4) Rollos (22) umfassen;
- zwei kleinere Seitenflächen der Umhüllungsstruktur (4), von denen jede eine abnehmbare untere Tür (23), einen Zwischenseitenwandabschnitt (24) und einen oberen Seitenwandabschnitt (25) umfasst; wobei die untere Tür (23) und der obere Seitenwandabschnitt (25) Lüftungsgitter (23a, 25a) umfassen;
- eine obere Fläche der Umhüllungsstruktur (4) ist Dach (21) ist, umfassend zwei diagonale Verstärkungsprofile (26), deren Enden in die vier Ecken des Daches (21) münden, in denen Haken (27) angeordnet sind;
- eine untere Fläche der Umhüllungsstruktur (4) ein Hohlraum ist, der von vier Profilen begrenzt wird, die einen Teil des Rahmens der Umhüllungsstruktur (4) bilden.

11. Trägervorrichtung für eine Haspel nach einem der vorhergehenden Ansprüche, **dadurch gekennzeichnet, dass** die Hydrauliköl-Steuereinheit (28) ein Motorelement umfasst, das zwischen einem Elektromotor und einem Verbrennungsmotor ausgewählt wird; wobei das Motorelement zum Übertragen einer Drehbewegung auf eine Hydraulikpumpe ausgebildet ist, die Teil der Hydrauliköl-Steuereinheit (28) ist.

12. Trägervorrichtung für eine Haspel nach Anspruch 11, **dadurch gekennzeichnet, dass** sie einen elektrischen Anschluss (11) umfasst, der sich in der festen unteren Basis (3) befindet und zum Anschließen einer Stromversorgung zur Versorgung der Hydrauliköl-Steuereinheit, wenn diese von einem Elektromotor angetrieben wird, angeordnet auf der festen unteren Basis (3), ausgebildet ist.

## Revendications

1. Dispositif de support pour une bobine, dans lequel la bobine (1) est maintenue sur un support (2) comprenant une base supérieure (2a) et deux ponts (2b) se faisant face, un arbre tubulaire (1a) de la bobine (1) étant couplé, par ses extrémités, aux ponts, la bobine (1) pouvant tourner au moyen d'un premier dispositif de transmission de mouvement de rotation ;
dans lequel le dispositif de support comprend une unité de contrôle d'huile hydraulique (28) intégrée dans une base inférieure fixe (3), dans lequel l'unité de contrôle d'huile hydraulique (28) est configurée pour fournir l'énergie hydraulique au dispositif afin de fournir le mouvement de rotation au moins à la bobine (1) ; et la base supérieure (2a) du support (2) est couplée, en parallèle, à la base inférieure fixe (3) ; dans lequel ledit couplage comprend un raccordement articulé centré (6) qui permet au support (2) de tourner, par rapport à la base inférieure fixe (3), dans deux directions de rotation autour d'un axe vertical centré imaginaire (33) ; comprenant en outre un deuxième dispositif de transmission de mouvement de rotation du support (2) ; et le dispositif de support comprend une structure enveloppante de protection (4) configurée pour être fixée, de manière amovible, à la base supérieure (2a) du support (2) ; et le premier dispositif de transmission de mouvement de rotation de la bobine (1) est positionné à l'intérieur de l'espace délimité entre les deux ponts (2b), en opposition à la base supérieure (2a) du support (2), à proximité de l'un desdits ponts (2b) et sans faire saillie à l'extérieur à partir de ces derniers ; et l'unité de contrôle d'huile hydraulique (28) est fixée à la base inférieure fixe (3) et positionnée dans l'espace interne délimité par la structure enveloppante (4) ; dans lequel ladite unité de contrôle d'huile hydraulique (28) est configurée pour alimenter un motoréducteur hydraulique (5) qui constitue le premier dispositif de transmission de mouvement de rotation de la bobine (1) et pour alimenter un cylindre hydraulique (29) qui constitue un deuxième dispositif de transmission de mouvement de rotation du support (2) autour de l'axe vertical imaginaire (33) ; et dans lequel le motoréducteur (5) comprend un moteur hydraulique (5a) et un engrenage (5b).

2. Dispositif de support pour une bobine selon la revendication 1, **caractérisé en ce que** le cylindre hydraulique (29) est raccordé par une première extrémité, à la base inférieure fixe (3) au moyen d'un premier raccordement articulé (30), alors qu'une deuxième extrémité du cylindre hydraulique (29), opposée à la première extrémité, se raccorde à la base supérieure (2a) du support (2) au moyen d'un deuxième raccordement articulé (31).

3. Dispositif de support pour une bobine selon l'une quelconque des revendications 1 ou 2, **caractérisé en ce que** :
- le motoréducteur hydraulique (5) est fixé à un pont (2b) du support (2) au moyen d'une bride intermédiaire (32) vissée audit pont (2b) ; dans lequel ladite bride intermédiaire (32) comprend un corps tubulaire (32a), dont l'un des bords d'extrémité comprend une aile externe (32b), alors que l'autre bord d'extrémité du corps tubulaire (32a) comprend une aile interne (32c) ; dans lequel la bride intermédiaire (32) est fixée au pont (2b) au moyen de l'aile externe (32b) ; et dans lequel le corps tubulaire (32a) de la bride intermédiaire (32) passe à travers un trou dans le pont (2b) occupant la partie de l'espace interne délimité entre les deux ponts (2b) du support (2) ;
- le moteur hydraulique (5a) est logé à l'intérieur du trou interne délimité par le corps tubulaire (32a) de la bride intermédiaire (32) ; dans lequel ledit moteur hydraulique (5a) est vissé à l'engrenage (5b) ;
- l'engrenage (5b) est logé dans une section d'extrémité de l'intérieur de l'arbre tubulaire (1a) de la bobine (1) ; dans lequel afin de transmettre le mouvement de rotation à la bobine (1), un élément de sortie dudit engrenage (5b) est vissé à une bague interne (13) qui fait partie de l'arbre tubulaire (1a) de la bobine (1).

4. Dispositif de support pour une bobine selon la revendication 1, **caractérisé en ce qu'**une première extrémité de la bobine (1) comprend une saillie (12) configurée pour se coupler à un palier monté dans le trou de l'un des deux ponts (2b) du support (2) ; dans lequel ladite première extrémité est opposée à une deuxième extrémité de la bobine (1) qui correspond à l'emplacement du motoréducteur hydraulique (5).

5. Dispositif de support pour une bobine selon la revendication 1, **caractérisé en ce que** la structure enveloppante (4) est couplée à la base supérieure (2a) du support (2) au moyen d'ancrages (10) formés par des éléments mâles et des éléments femelles ; dans lequel les éléments mâles sont montés à l'intérieur des éléments femelles.

6. Dispositif de support pour une bobine selon la revendication 1, **caractérisé en ce que** le raccordement articulé (6) centré entre la base supérieure (2a) du support (2) et la base inférieure fixe (3) est une couronne de palier comprenant des premiers chemins arqués (8) solidement fixés à la base supérieure (2a) et des deuxièmes chemins arqués (9) solidement fixés à la base inférieure fixe (3) ; dans lequel les deux chemins arqués (8, 9) sont en contact entre eux et sont à équidistance de l'axe vertical centré imaginaire (33).

7. Dispositif de support pour une bobine selon la revendication 6, **caractérisé en ce que** la base supérieure (2a) du support (2) comprend un cadre comprenant un cadre rectangulaire périmétral et des profils de renforcement, auxquels les premiers chemins arqués (8) sont fixés, et également une première partie plate centrée (14) à laquelle une partie du raccordement articulé centré (6) est fixée ; dans lequel ladite partie plate centrée (14) a une ouverture débouchante ; et coïncidant avec la face de la base supérieure (2a) du support (2) opposée à la face sur laquelle les premiers chemins arqués (8) sont positionnés, on trouve une structure de métal en feuille (15).

8. Dispositif de support pour une bobine selon la revendication 6, **caractérisé en ce que** la base inférieure fixe (3) comprend un cadre comprenant un cadre rectangulaire périmétral et des profils de renforcement, auxquels les deuxièmes chemins arqués (9) sont fixés, et également une deuxième partie plate centrée (16) à laquelle une partie du raccordement articulé centré (6) est fixée ; dans lequel ladite deuxième partie plate centrée (16) a une ouverture débouchante, et coïncidant avec la face de la base inférieure fixe (3) dans laquelle les deuxièmes chemins arqués (9) sont positionnés, on trouve également des feuilles de métal de protection (17).

9. Dispositif de support pour une bobine selon la revendication 1, **caractérisé en ce qu'**il comprend des moyens de commande pour la commande à distance de l'unité de contrôle d'huile hydraulique (28) et des premier et deuxième dispositifs de transmission de mouvement de rotation.

10. Dispositif de support pour une bobine selon la revendication 1, **caractérisé en ce que** la structure enveloppante (4) comprend une configuration prismatique avec ses bords formés par des profils qui constituent un cadre ; dans lequel :
- deux faces latérales plus grandes de la structure enveloppante (4) comprennent des volets roulants (22) ;
- deux faces latérales plus petites de la structure enveloppante (4), dont chacune comprend une porte inférieure amovible (23), une partie de paroi latérale intermédiaire (24) et une partie de paroi latérale supérieure (25) ; dans lequel la porte inférieure (23) et la partie de paroi latérale supérieure (25) comprennent des grilles de ventilation (23a, 25a) ;
- une face supérieure de la structure enveloppante (4) est un toit (21) comprenant deux profils de renforcement diagonaux (26), dont les extrémités mènent aux quatre coins dudit toit (21) dans lesquels sont positionnés des crochets (27) ;
- une face inférieure de la structure enveloppante (4) est un espace creux délimité par quatre profils qui font partie du cadre de la structure enveloppante (4).

11. Dispositif de support pour une bobine selon l'une quelconque des revendications précédentes, **caractérisé en ce que** l'unité de contrôle d'huile hydraulique (28) comprend un élément de moteur sélectionné entre un moteur électrique et un moteur à combustion interne ; dans lequel ledit élément de moteur est configuré pour transmettre un mouvement de rotation à une pompe hydraulique qui fait partie de l'unité de contrôle d'huile hydraulique (28).

12. Dispositif de support pour une bobine selon la revendication 11, **caractérisé en ce qu'**elle comprend un raccordement électrique (11) positionné dans la base inférieure fixe (3) configurée pour raccorder une alimentation électrique pour alimenter l'unité de contrôle d'huile hydraulique lorsqu'elle est alimentée par un moteur électrique, positionné sur la base inférieure fixe (3).
